Europäisches Patentamt

European Patent Office

Office européen des brevets

(19)

(11) Publication number: **0 005 331**
**B1**

(12) **EUROPEAN PATENT SPECIFICATION**

(45) Date of publication of patent specification: **20.10.82**

(21) Application number: **79300646.1**

(22) Date of filing: **19.04.79**

(51) Int. Cl.³: **B 03 C 1/24, B 03 C 1/08, B 65 G 35/00**

(54) Apparatus for separating particles of magnetically suscepting material.

(30) Priority: **28.04.78 GB 1696178**

(43) Date of publication of application:
**14.11.79 Bulletin 79/23**

(45) Publication of the grant of the patent:
**20.10.82 Bulletin 82/42**

(84) Designated Contracting States:
**DE FR GB NL SE**

(56) References cited:
**DE - A - 2 314 200**
**DE - A - 2 553 855**
**DE - C - 801 771**
**FR - A - 1 154 908**
**US - A - 4 062 443**

(73) Proprietor: **DAVY-LOEWY LIMITED**
**Prince of Wales Road**
**Sheffield S9 4EX Yorkshire (GB)**

(72) Inventor: **Causton, Robert John**
**21, Gainsborough Avenue Eaton Ford**
**St. Neots Cambridgeshire PE19 3RJ (GB)**
Inventor: **Richardson, Joseph**
**76, Hunsworth Lane**
**Cleckheaton Yorkshire (GB)**

(74) Representative: **Kirk, Geoffrey Thomas et al,**
**BATCHELLOR, KIRK & EYLES 2 Pear Tree Court**
**Farringdon Road**
**London EC1R 0DS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Apparatus for separating particles of magnetically suscepting material

This invention relates to apparatus for separating particles of magnetically suscepting material from a mixture of particles of magnetically suscepting material and particles of non-magnetically suscepting material as described in the state of the art part of claim 1.

It is known from DE—A—2553855 for such apparatus to comprise a vibrating conveyor which carries the mixture of particles to the underside of a continuous conveyor belt of magnetically inert material. An elongate linear thrust device is positioned above the belt so that particles of magnetically suscepting material are attracted to the belt. Means are provided for collecting the magnetically suscepting material from the conveyor belt and also for collecting the particles of non-magnetically suscepting material from the end of the vibrating conveyor. The end of the linear thrust device at which the particles are introduced on to the conveyor belt is situated at a somewhat greater distance from the vibrating conveyor than is the opposite end. Because of this positioning of the elongate thrust device relative to the vibrating conveyor, particles of magnetically suscepting material are only attracted to the continuous belt in a limited layer of thickness.

It is an object of the present invention to provide an improved version of such apparatus in which the need to provide a continuous conveyor belt is avoided.

Accordingly, the present invention is characterised in that the member is a stationary plate and the air gap between the plate and the thrust device increases in size along the length of the path taken by the particles which are transported on the plate away from the input means.

With this arrangement, the movement of the particles along the plate is due to the moving magnetic field set up by the thrust device and the thrust device does not simply serve to hold the particles of magnetic suscepting material on a moving belt. It is necessary to ensure that any particles of non-magnetically suscepting material which are drawn up on to the plate with the particles of magnetically suscepting material fall off the plate. To this end the air gap between the plate and the thrust device increases in the direction of movement of the particles so that the retaining effect of the magnetic field is reduced.

Examples of magnetically suscepting material which can be transported are ferrous powder, low alloy steel powder, powders of cobalt containing alloys, and powders of other magnetic alloys.

For example, during the manufacture of high speed steel powder by an atomisation process, the powder so formed is contaminated by particles of refractory material from the atomising vessel. The apparatus may be used to separate the particles of high speed steel from the particles of refractory contaminant.

Another example is the use of the apparatus to separate grinding swarf from particles removed from a grinding wheel during a grinding operation. When a magnetically suscepting material is ground on a grinding wheel, the swarf of the magnetically suscepting material which is produced could be re-used to advantage but it contains particles removed from the grinding wheel. Since the grinding wheel particles are of a non-magnetically suscepting material, the apparatus of the present invention can be used to separate these particles from those of the grinding swarf.

In order that the invention may be more readily understood it will now be described, by way of example only, with reference to the accompanying drawing which is a side elevation, partly in section, of particle separating apparatus in accordance with the invention.

An elongate electric linear thrust device 21 having its windings embedded in a protective resin is mounted on the underside of the top support member 23 of a generally rectangular framework 25 so that the flat face 27 of the device is substantially horizontal and facing downwardly. The electrical supply is preferably a three phase supply but a single phase supply with a capacitor present in one phase could be used. In use, the device produces a linear thrust acting along the length of the device. If, for example, an aluminium plate was placed on the device, the plate would be displaced in the direction of the linear thrust. With the particulate material, however, any magnetic suscepting particles, such as particles of ferrous materials, which are applied to the linear device are displaced along the device in the direction opposite to the direction of the linear thrust. The device thus serves to transport magnetically suscepting material from one end of the device to the other. A plate 29 of magnetically inert material is supported from the support member 23 below the face 27 of the device. The plate has a generally straight portion 31 followed by a downwardly curved portion 33. The portion 29 is inclined downwardly with respect to the face 27 so that there is a smaller air gap between the plate and the face at the left-hand end of the portion 31 than there is at the right-hand end. The supports for the plate 29 are such that the air gap between the plate and the face 27 can be adjusted along the length of the plate. The plate 29 is contained within an enclosure 35 having two outlets 37 and 39 respectively to which removable hoppers 38 and 40 are fastened.

A vibratory feed device for particulate material has a hopper 41 from which the particulate material is deposited on to a channel member 43. The channel member is vibrated by means indicated by reference numeral 45. One end of the channel 43 projects through an opening in the enclosure 35 to a position below the plate 29.

If a mixture of magnetically suscepting and non-suscepting particles are placed in the hopper 41, the feed device causes the particles to pass along the channel member and into the enclosure 35. With the linear thrust device energised, the particles of magnetically suscepting materials move upwardly from the end of the channel 43 on to the underside of the plate 29. Most of the particles of non-magnetically suscepting material will fall off the end of the channel 43 into the enclosure 35 and be collected in the bin 38, but some will be carried up with the other particles on to the plate 29. The particles drawn on to the plate are transported along its underside towards the portion 33 of the plate. As the particles are displaced along the plate, the air gap between the plate and the thrust device increases and these particles of non-magnetically suscepting material soon drop off the plate into the bin 38. The other particles however continue to travel along the underside of the plate towards the portion 33 and eventually, either before or after they reach portion 33, they drop off into the bin 40 thereby separating them from the particles collected in the bin 38.

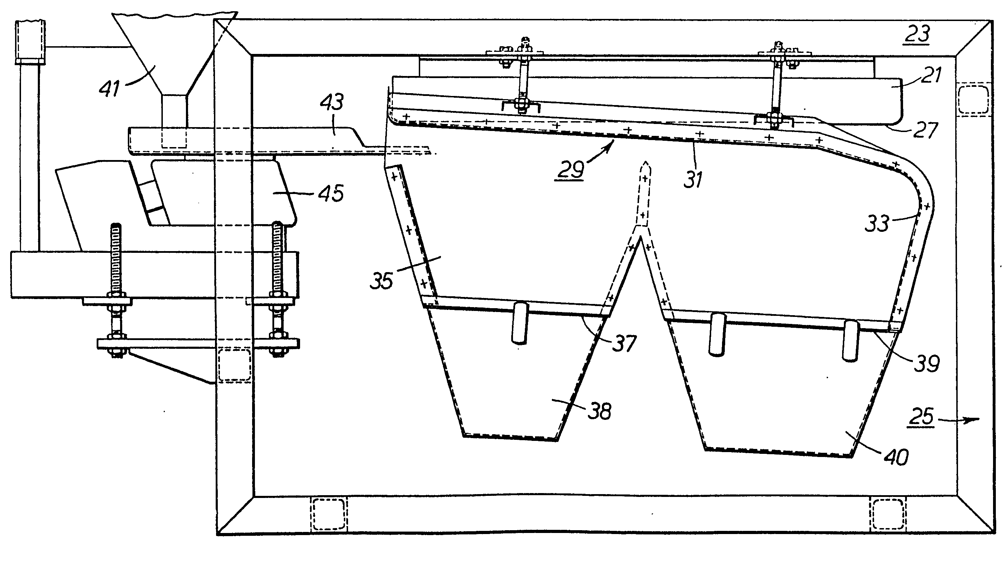

The last pole of the linear thrust device at the right-hand end of the device shown in Figure 3 may be wound in antiphase to the other poles or alternatively the last pole may be periodically pulsed in order to throw the particles off the plate 29.

An example of the apparatus shown in the figure is as follows:—

Linear thrust device 46 cm long, type A84 415 3 ph 50 c/s manufactured by Linear Motors Limited, Loughborough, England.

Air gap at input end of thrust device 4—8 mm.

Air gap at output end of thrust device 20 mm.

Pick up height from channel 43 to plate 29 5—30 mm.

With this apparatus, high speed steel powder M2 can be separated from a mixture of this powder and refractory particles at a rate of about 10 kilos per hour.

In each of the embodiments of the invention, the length of the path may be increased by connecting two or more linear thrust devices in end-to-end relation.

## Claims

1. Apparatus for separating particles of magnetically suscepting material from a mixture of particles of magnetically suscepting material and particles of non-magnetically suscepting material comprising a member (29) of magnetically inert material, an elongate electric linear thrust device (21) positioned above the member and spaced therefrom by an airgap, input means (41, 43) for introducing the mixture of particles to the underside of the member (29), a first means (38) for collecting particles falling from the input means and from the underside of the member close to the input means and second means (40) for collecting particles of magnetically suscepting material transported on the member away from the input means by the action of the linear thrust device (21), characterised in that the member is a stationary plate (31, 33) and the air gap increases in size along the length of the path taken by the particles which are transported on the plate (31, 33) away from the input means (41, 43).

2. Apparatus as claimed in claim 1, in which the linear thrust device and the plate are supported from a rigid framework and the plate is adjustable with respect to the framework to adjust the air gap along its length.

## Revendications

1. Appareil pour séparer des particules de substance magnétisable d'un mélange de particules de substance magnétisable et de substance non magnétisable, comprenant un organe (29) en un matériau magnétiquement inerte, un dispositif de poussée linéaire électrique allongé (21) disposé au-dessus de cet organe (29) et séparé de celui-ci par un entrefer, des moyens d'alimentation (41, 43) pour introduire le mélange de particules du côté de la surface inférieure de l'organe (29), un premier moyen (38) pour recueillir les particules tombant des moyens d'alimentation et de la partie de la surface inférieure de l'organe voisine de ces moyens d'alimentation et un second moyen (40) pour recueillir les particules de substance magnétisable transportées sur l'organe à partir des moyens d'alimentation sous l'effet du dispositif de poussée linéaire (21), caractérisé en ce que l'organe est une plaque fixe (31, 33) et en ce que la largeur de l'entrefer augmente le long du chemin parcouru par les particules transportées sur la plaque (31, 33) en s'éloignant des moyens d'alimentation (41, 43).

2. Appareil selon la revendication 1, dans lequel le dispositif de poussée linéaire et la plaque sont supportés par un bâti rigide, la position de la plaque étant réglable par rapport à ce bâti, de manière à ajuster la largeur de l'entrefer dans sa direction longitudinale.

## Patentansprüche

1. Gerät zum Abtrennen von Teilchen aus magnetisierbarem Material, aus einer Mischung von Teilchen aus magnetisierbarem Material und von Teilchen aus nicht magnetisierbarem Material, welches ein Geräteteil (29) aus magnetisch inertem Material, eine langgestreckte elektrische lineare Vorschubvorrichtung (21), die oberhalb des Geräteteils und von diesem durch einen Luftspalt getrennt angeordnet ist, Zuführmittel (41, 43) zum Zuführen der Teilchenmischung zur Unterseite des Geräteteils (29), eine erste Anordnung (38) zum Sammeln von Teilchen, die von den Zuführmitteln und von der Unterseite des Geräteteils in der Nähe der Zuführmittel abfallen, und eine zweite Anordnung (40) zum Sammeln von Teilchen aus magnetisierbarem Material, die auf dem Geräteteil unter Einwirkung der linearen Vorschubvorrichtung (21) von den Zuführmitteln weggeführt werden, aufweist, dadurch gekennzeichnet, das der Geräteteil eine feststehende Platte (31, 33) ist und die Grösse des Luftspalts entlang des Weges der Teilchen, die auf der Platte (31, 33) von den Zuführmitteln (41, 43) weggeführt werden, zunimmt.

2. Gerät nach Anspruch 1, in welchem die lineare Vorschubvorrichtung und die Platte von einem starren Gestell getragen werden und die Platte gegenüber dem Gestell zur Einstellung des Luftspaltes entlang ihrer Länge einstellbar ist.

23

21

27

41

43

29

31

33

45

35

37

39

38

25

40

0 005 331